# EUROPÄISCHE PATENTSCHRIFT

(11) **EP 4 268 071 B1**
(45) Veröffentlichungstag und Bekanntmachung des Hinweises auf die Patenterteilung: **27.11.2024**
(21) Anmeldenummer: 22710520.2
(22) Anmeldetag: 17.02.2022
(51) Int. Cl.: G06F 9/445

(54) **VERFAHREN ZUR KONFIGURATION EINER STEUERUNGSSOFTWARE BEI EINEM SCHIENENFAHRZEUG**
METHOD FOR THE CONFIGURATION OF CONTROL SOFTWARE IN A RAIL VEHICLE
PROCÉDÉ DE CONFIGURATION D'UN LOGICIEL DE COMMANDE DANS UN VÉHICULE FERROVIAIRE

(30) Priorität: 26.02.2021 DE 102021201834
(43) Veröffentlichungstag der Anmeldung: 01.11.2023
(73) Patentinhaber: Siemens Mobility GmbH, 81739 München (DE)
(72) Erfinder: WEBER, Matthias Alexander, 91080 Uttenreuth (DE)
(74) Vertreter: Siemens Patent Attorneys
(86) Internationale Anmeldenummer: PCT/EP2022/053919
(87) Internationale Veröffentlichungsnummer: WO 2022/179928

(56) Entgegenhaltungen:
- US-A1- 2020 044 868

## Beschreibung

Die Erfindung betrifft ein Verfahren zur Konfiguration einer Steuerungssoftware bei einem Schienenfahrzeug, das sich bevorzugt bereits im operativen Betrieb befindet.

Das Verhalten eines Schienenfahrzeugs wird über Fahrzeugsoftware bzw. über Steuerungssoftware bestimmt. Diese ist für einen Schienenfahrzeugtyp speziell entwickelt und für diesen nachvollziehbar als Softwarerelease bezeichnet, geprüft und zugelassen.

Die Software wird vor bzw. im Zuge der Auslieferung des Schienenfahrzeugs auf dieses aufgespielt und ist bei Auslieferung an einen Kunden fester Bestandteil des Schienenfahrzeugs.

Kundenseitig gewünschte Änderungen bzw. Anpassungen der Software bedingen eine kostenintensive Neuentwicklung bzw. Ergänzung der Software mit nachfolgender erneuter Prüfung und Zulassung samt Inbetriebnahme der Software beim Schienenfahrzeug des Kunden.

Entsprechend geänderte Fahrzeug- bzw. Steuerungssoftware wird nach erfolgter Zulassung vor Ort und mit Hilfe von Service-Personal auf das jeweilige Schienenfahrzeug "aufgespielt" bzw. in den entsprechenden programmierbaren Komponenten installiert.

Je nach Umfang der Software-Änderung muss nach erfolgter Inbetriebsetzung ein sogenannter Non-Regression-Test in einer geeigneten Test-Infrastruktur durchgeführt werden.

Dieses Verfahren zur Software-Änderung ist bezüglich des Aufwands intensiv an Zeit, Personal sowie an Kosten.

Aus der Druckschrift US 2020/0044868 A1 ist ein Verfahren zur selektiven Aktivierung und Konfiguration von Komponenten bekannt, bei dem ein hergestelltes elektronisches Gerät mindestens eine Hardwarekomponente enthält, die gesperrt oder deaktiviert ist. Ein Endbenutzer des elektronischen Geräts nutzt eine computergestützte Plattform oder eine Cloud-basierte Plattform, um die Aktivierung oder Aktualisierung dieser Hardwarekomponente anzufordern.

Es ist daher die Aufgabe der vorliegenden Erfindung, ein verbessertes Verfahren zur Anpassung bzw. zur Konfiguration einer Fahrzeug- bzw. Steuerungssoftware bei einem Schienenfahrzeug anzugeben.

Diese Aufgabe wird durch die Merkmale des Anspruchs 1 sowie des Anspruchs 13 gelöst. Vorteilhafte Weiterbildungen sind in den abhängigen Ansprüchen angegeben.

Die Erfindung betriff ein Verfahren zur Konfiguration einer Fahrzeugsoftware bzw. einer Steuerungssoftware bei einem Schienenfahrzeug sowie ein Schienenfahrzeug mit einer Steuerungssoftware.

Erfindungsgemäß werden in der Software neben Grundfunktionen weitere Funktionen zusätzlich aufgenommen, die optional aktivierbar bzw. deaktivierbar sind und mit denen kundenspezifische Wünsche bzw. ein kundenspezifisches Anforderungsprofil Einzelfahrzeug-spezifisch adressierbar sind.

Die Grundfunktionen beschreiben dabei die für den Grundbetrieb des Schienenfahrzeugs benötigten Software-Anteile, beispielsweise Funktionen,
- die den Antrieb bzw. dessen Steuerung betreffen,
- die die Bremsen bzw. deren Steuerung betreffen,
- etc.

Die optionalen Funktionen beschreiben dabei Funktionen, die nach Kundenwunsch bzw. nach dem kundenspezifischen Anforderungsprofil auch nach Auslieferung des Schienenfahrzeugs auswählbar bzw. beeinflussbar sind. Dabei handelt es sich beispielsweise um eine aktivierbare bzw. deaktivierbare Funktion
- die einen Betriebsmodus "Waschfahrt des Schienenfahrzeugs" betrifft bzw. diesen Betriebsmodus ermöglicht und adressiert,
- die eine Einstellung bzw. Vorgabe einer maximalen Geschwindigkeit des Schienenfahrzeugs ermöglicht bzw. betrifft,
- die ein Freischalten spezifischer Leistungserhöhungen des Schienenfahrzeugs ermöglicht bzw. betrifft,
- die ein Freischalten eines Fahrerassistenz-Systems ermöglicht bzw. betrifft,
- etc.

Die Grundfunktionen und die optionalen Funktionen werden in ihren Ausprägungen, Kombinationen und Funktionsabläufen vor der Implementierung im Schienenfahrzeug seitens des Herstellers bzw. seitens beauftragter Stellen getestet, validiert und zugelassen.

Wichtig ist in diesem Zusammenhang, dass die Grundfunktionen und die optionalen Funktionen Fahrzeugtyp- und Einzelfahrzeug-spezifisch zugelassen werden, während die optionalen Funktionen zusätzlich Einzelfahrzeug-spezifisch aktivierbar bzw. deaktivierbar sind.

Die optionalen Funktionen werden durch individuell zugeordnete Parameter aktiviert bzw. deaktiviert sowie, wenn nötig, durch gesetzte Parameter in ihrem Ablauf bzw. in ihrem Ergebnis beeinflusst.

Diese Parameter werden nachfolgend als Schaltparameter bezeichnet und sind als Werteparameter bzw. als Parameterfelder ausgebildet.

Mit Hilfe eines Werteparameters erfolgt eine Aktivierung bzw. Deaktivierung einer zugeordneten optionalen Funktion, während mit Hilfe eines Parameterfelds neben der Aktivierung bzw. Deaktivierung einer zugeordneten optionalen Funktion zusätzlich deren interner Ablauf beeinflusst wird.

Die aktivierte optionale Funktion unterliegt einem vorbestimmten Nutzungszeitraum, bei dessen Ablauf die optionale Funktion über einen zugehörigen Schaltparameter deaktiviert wird bzw. bei dessen Ablauf Werte einer zugehörigen optionalen Funktion auf vorbestimmte (Basis-) Werte gesetzt werden.

Die Software wird also nach Ablauf des Nutzungszeitraums in einen vorbestimmten bzw. vorhergehenden Zustand (zurück-) gesetzt.

In einer bevorzugten Weiterbildung wird der optionalen Funktion ein Startdatum und/oder ein Enddatum zugeordnet, um den Nutzungszeitraum zu definieren.

Über eine ausschließliche Zuordnung eines Startdatums wird ermöglicht, die zugehörige optionale Funktion ab dem Startdatum unbeschränkt, also dauerhaft, zu nutzen.

Über eine ausschließliche Zuordnung eines Enddatums wird ermöglicht, die zugehörige optionale Funktion ab sofort bis zum Erreichen des Enddatums zu nutzen.

Über eine Zuordnung eines Startdatums und eines Enddatums wird ermöglicht, die zugehörige optionale Funktion in einem vorbestimmten Zeitraum zu nutzen.

Erfindungsgemäß wird dem Schienenfahrzeug-Hersteller vor Ablauf des Nutzungszeitraums eine Warnmeldung angezeigt, um diesen auf den bevorstehenden Ablauf des Nutzungszeitraums hinzuweisen.

In einer bevorzugten Weiterbildung wird ein erstmaliges Anzeigen und ggf. eine Wiederholungsfrequenz der Anzeige der Warnmeldung spezifisch eingestellt.

In einer vorteilhaften Weiterbildung wird eine dauerhafte Aktivierung einer optionalen Funktion in einen Urzustand der Steuerungssoftware übernommen, die zur Aufrechterhaltung einer Sicherheit bevorzugt seitens des betroffenen Schienenfahrzeugs abgespeichert ist.

In einer vorteilhaften Weiterbildung wird bei jedem Neustart der Software auf einem Steuergerät bzw. -geräten des Schienenfahrzeugs geprüft, ob für eine optionale Funktion eine Warnmeldung vorliegt.

In einer vorteilhaften Weiterbildung bewirkt die Warnmeldung einer optionalen Funktion die Bildung gleichartiger Warnmeldungen für weitere optionale Funktionen. Damit wird verhindert, dass eine vorhersehbare Deaktivierung einer optionalen Funktion unerwünschten Auswirkungen auf andere optionale Funktionen bzw. auf die gesamte Steuerungssoftware hat.

Entsprechend wird für alle optionalen Funktionen eine einheitliche Warnmeldung gebildet, die bevorzugt als Konfigurationsbestandteil des Schienenfahrzeugs hinterlegt wird.

Erfindungsgemäß ist eine Liste aller optionalen Funktionen samt zugeordnetem Nutzungszeitraum eines ausgewählten Schienenfahrzeugs ferngesteuert abrufbar.

Dies erfolgt beispielsweise unter Verwendung eines Webservers bzw. eines Internetbrowsers.

Erfindungsgemäß werden die Schaltparameter seitens des Herstellers bzw. seitens des Vertriebes des Schienenfahrzeugs inhaltlich ausgewählt bzw. festgelegt. Damit wird ein intelligentes Flottenmanagement ermöglicht, bei dem ausgewählte Schienenfahrzeuge an spezifische Aufgaben nach Kundenvorgaben bzw. nach Vorgabe eines kundenspezifischen Anforderungsprofils angepasst werden.

In einer vorteilhaften Weiterbildung erfolgt die Festlegung der Schaltparameter unter Verwendung Software-gestützter Werkzeuge, die es beispielsweise den Vertriebsmitarbeitern ermöglicht, zulässige Schaltparameter für entsprechende Funktionen auszuwählen, als Schaltparametersatz zu befüllen und diese abzuspeichern.

In einer vorteilhaften Weiterbildung werden die Schaltparameter in Form einer Datei abgespeichert, die für Steuergeräte des Schienenfahrzeugs unmittelbar verarbeitbar ist.

In einer vorteilhaften Weiterbildung wird die Datei mit den Schaltparametern Einzelfahrzeug-spezifisch verschlüsselt, um unerlaubte Manipulationen zu verhindern bzw. um eine Vervielfältigung der Datei zu unterbinden.

In einer vorteilhaften Weiterbildung wird die Datei mit den Schaltparametern über einen Kommunikationskanal zur Implementierung im Schienenfahrzeug übertragen.

Die Übertragung ist entweder an einen Service-Techniker gerichtet, der die Datei beispielsweise via Email oder über eine Cloud-basierte Datenübertragung erhält, oder die Datei-Übertragung ist direkt an das betroffene Schienenfahrzeug gerichtet, das die Datei empfängt und dessen Steuergeräte die Datei dann bevorzugt automatisiert umsetzen.

In einer bevorzugten Weiterbildung wird die Übertragung der Datei mit den Schaltparametern verschlüsselt durchgeführt, um Verfälschungen, Übertragungsfehler bzw. Security-Angriffe zu verhindern. Dazu wird beispielsweise ein Public-Key-Verfahren verwendet.

In einer vorteilhaften Weiterbildung wird die Datei mit den Schaltparametern auf einem Rechner des Schienenfahrzeugs zwischengespeichert. Dies dient der Status-Dokumentation der Software und bildet eine Rückfalleben, mit der die Fahrzeugsicherheit erhöht wird.

In einer vorteilhaften Weiterbildung wird die gesamte Steuerungstechnik, die mehrere Steuergeräte zur Parametrierung umfasst, eines betrachteten Schienenfahrzeugs über die Datei adressiert bzw. beeinflusst. Pro Schienenfahrzeug wird dann genau eine Datei mit Schaltparametern erstellt und im Schienenfahrzeug angewendet, deren Inhalt auf die zugehörigen Steuergeräte verteilt wird. Damit wird ein notwendiger Handhabungsaufwand minimiert.

In einer vorteilhaften Weiterbildung fragen die Steuergeräte beim Neustart bzw. beim Hochlaufen ("booten") an einer zentralen Stelle des Schienenfahrzeugs oder einer landseitigen Kontrollstation nach, ob für das zugehörige Schienenfahrzeug neue Schaltparameter vorliegen.

In einer vorteilhaften Weiterbildung wird diese Nachfrage mit Hilfe eines Umschalt-Managers koordiniert, um eine unkoordinierte Aktivierung der Schaltparameter in den zugehörigen Funktionen zu verhindern bzw. um mit Blick auf zeitliche Abläufe eine zuverlässige Aktivierung bzw. Deaktivierung der optionalen Funktionen zu ermöglichen.

In einer bevorzugten Weiterbildung verwendet der Umschalt-Manager dazu ein Verfahren, um Fingerabdrücke eines aktuell verwendeten Schaltparameter-Satzes sowie eines neu empfangenen Schaltparameter-Satzes zu bilden.

Zur Bildung der Fingerabdrücke kommt beispielsweise ein "Message-Digest Algorithm 5, MD5"-Verfahren oder ein CRC-Verfahren in Betracht, mit dem ein Schaltparameter-Satz inhaltlich eindeutig identifizierbar ist.

Die Fingerabdrücke werden zusammen mit einem zugehörigen Empfangsdatum an die zentrale Stelle übermittelt. Diese Stelle wählt dann als gültigen Schaltparameter-Satz denjenigen aus, dessen Fingerabdruck über alle Steuergeräte gleich ist sowie das jüngste Empfangsdatum aufweist und übermittelt die Entscheidung an das Steuergerät des Schienenfahrzeugs bzw. an die zugehörigen Steuergeräte.

In einer bevorzugten Weiterbildung erfolgt die Aktivierung bzw. Deaktivierung der optionalen Funktion in einem sicheren Zustand des Schienenfahrzeugs, bevorzugt im Stillstand und/oder in einer vorab definierten Fahrzeug-Umgebung.

Beim Neustart der Steuergeräte wird dann der neue Schaltparametersatz geladen, um den konfigurierten Funktionsumfang der Fahrzeug- bzw. der Steuerungssoftware zur Verfügung zu stellen.

In einer bevorzugten Weiterbildung erhält ein Triebfahrzeugführer des Schienenfahrzeugs eine Meldung, dass der Funktionsumfang der Software geändert bzw. konfiguriert wurde.

Bevorzugt wird dem Triebfahrzeugführer ein Veto-Recht eingeräumt, so dass er die Software-Konfiguration annehmen oder ablehnen kann.

Eine Ablehnungs-Entscheidung wird bevorzugt einmalig eingeholt und danach als dauerhafte Ablehnung bewertet, d.h. eine Ablehnungsentscheidung bleibt auch einem zukünftigen Neustart der Steuergeräte erhalten.

Alternativ dazu wird die Entscheidung des Triebfahrzeugführers bei jedem Neustart der Steuergeräte des Fahrzeugs erneut abgefragt.

In einer bevorzugten Weiterbildung erhält ein Triebfahrzeugführer des Schienenfahrzeugs an einem Display eine Liste der aktivierten optionalen Funktionen bzw. der zugehörigen Parameter angezeigt.

Eine Beeinflussung der gesetzten optionalen Funktionen durch den Triebfahrzeugführer ist nicht möglich. Diese Aufgabe obliegt bevorzugt dem Flottenmanagement.

In einer bevorzugten Weiterbildung bleibt ein bisheriger Schaltparameter-Satz gültig bzw. aktiv, wenn nicht alle Steuergeräte den neuen Schaltparameter-Satz einheitlich übernehmen.

In einer bevorzugten Weiterbildung wird bei einem Austausch eines Steuergeräts bzw. bei einer Ausgruppierung eines Steuergeräts ein Neustart der Steuergeräte der Leittechnik initialisiert, um die Übernahme aktuell gültiger Schaltparameter zu gewährleisten.

Durch das erfindungsgemäße Verfahren wird es dem Vertrieb, dem Hersteller bzw. dem Flottenmanagement eines Schienenfahrzeugs ermöglicht, vom Kunden gewünschte bzw. benötigte Funktionen bei bereits ausgelieferten Fahrzeugen nachträglich zu aktivieren, ohne dabei technische Fachabteilungen einbinden zu müssen.

Durch das erfindungsgemäße Verfahren wird es dem Vertrieb, dem Hersteller bzw. dem Flottenmanagement eines Schienenfahrzeugs ermöglicht, die Steuerungssoftware bei bereits ausgelieferten Fahrzeugen nachträglich in einem vorbestimmten Rahmen und dabei reaktionsschnell zu konfigurieren.

Durch das erfindungsgemäße Verfahren wird die Software-Konfiguration entweder mittels Service-Personal vor Ort oder unter Verwendung einer Datenfernübertragung durchführbar bzw. ermöglicht.

Durch das erfindungsgemäße Verfahren wird die Software-Konfiguration sowohl unter funktionalen als auch unter Sicherheitsaspekten zuverlässig durchführbar.

Durch das erfindungsgemäße Verfahren kann auf Kundenwünsche deutlich schneller reagiert werden, indem vordefinierte Parameter in Funktionen gesetzt werden bzw. indem bereits zugelassene Funktionen aktiviert werden.

Durch das erfindungsgemäße Verfahren werden Kosten reduziert, da eine Software-Konfiguration direkt, d.h. ohne Einbindung von nachträglichen Engineering-Leistungen, sowie ohne nachträgliche Validierung der Software bzw. ohne Neuzulassung der Software erfolgen kann.

Durch das erfindungsgemäße Verfahren werden bislang notwendige Non-Regression-Tests in einer dafür benötigten Test-Infrastruktur zumindest reduziert bzw. komplett vermieden.

Nachfolgend wird die Erfindung beispielhaft anhand einer Zeichnung näher erläutert. Dabei zeigt:

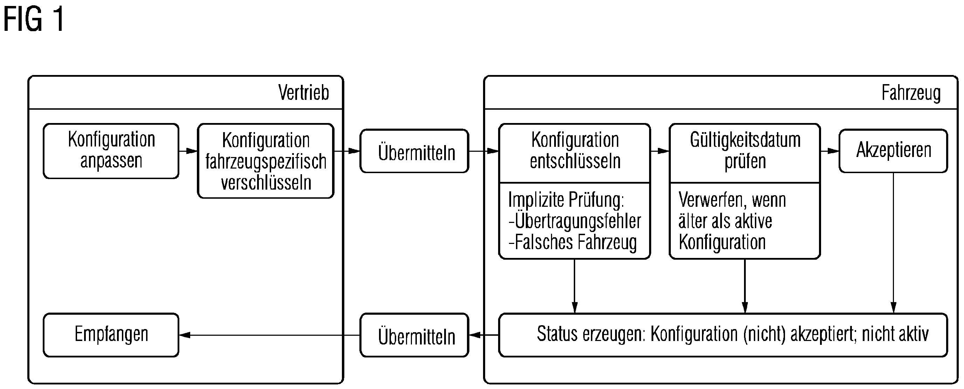

FIG 1 eine selbsterklärende Darstellung einer seitens des Vertriebs gebildeten Software-Konfiguration sowie deren Implementierung seitens eines Fahrzeugs bzw. Schienenfahrzeugs gemäß der vorliegenden Erfindung.

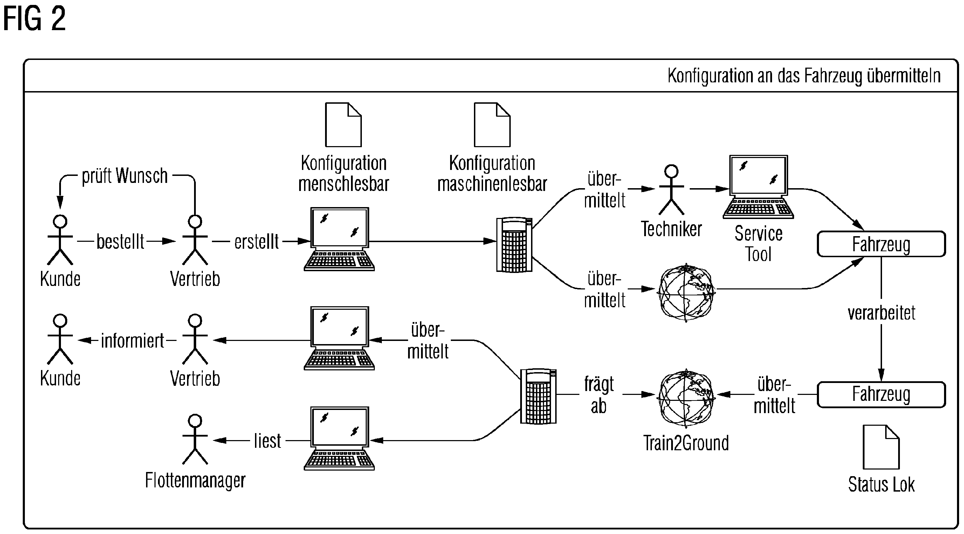

FIG 2 eine selbsterklärende Darstellung des Zusammenwirkens zwischen Kunden, Vertrieb und Fahrzeug bzw. Schienenfahrzeug gemäß der vorliegenden Erfindung.

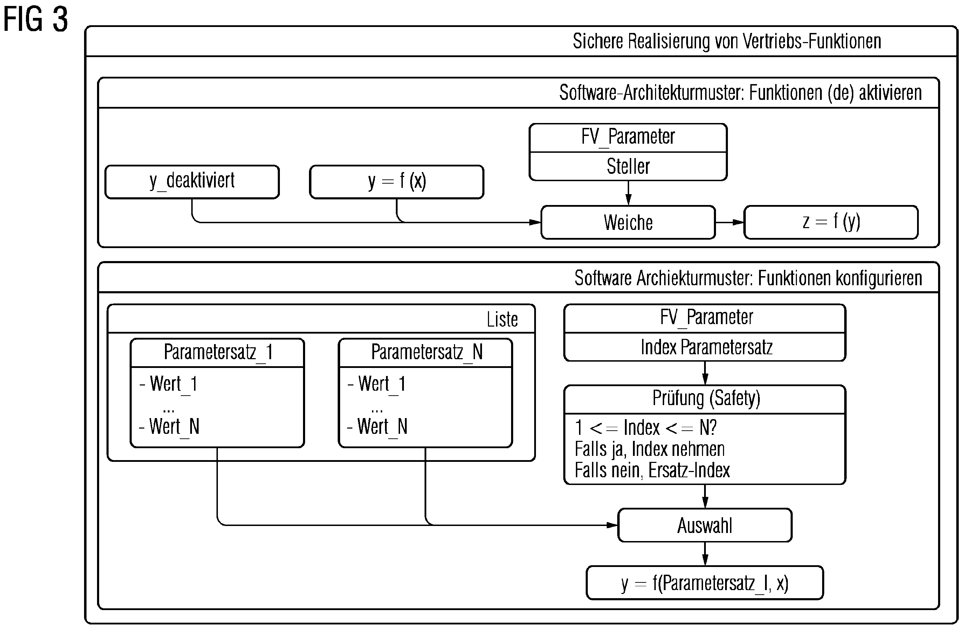

FIG 3 eine selbsterklärende Ausgestaltung einer Aktivierung bzw. Deaktivierung einer optionalen Funktion gemäß der vorliegenden Erfindung.

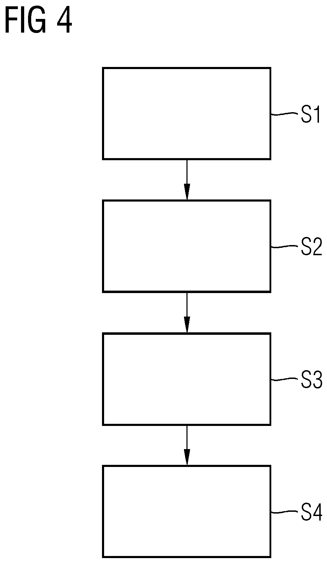

FIG 4 zeigt eine Gesamtsicht der vorliegenden Erfindung anhand eines Ablaufdiagramms.

In einem ersten Schritt S1 werden in einer Steuerungssoftware, die für eine Vielzahl an Schienenfahrzeugen bestimmt ist, Grundfunktionen implementiert, die für den Grundbetrieb der Schienenfahrzeuge benötigt werden. In der Steuerungssoftware werden optionale Funktionen implementiert, die zur Durchführung von kundenspezifischen Wünschen benötigt werden.

In einem zweiten Schritt S2 werden die Grundfunktionen und die optionalen Funktionen in ihren Ausprägungen, Kombinationen und Funktionsabläufen vor Implementierung der Steuerungssoftware in den Schienenfahrzeugen seitens des Herstellers bzw. seitens beauftragter Stellen getestet, validiert und zugelassen.

In einem dritten Schritt S3 werden die Grundfunktionen und die optionalen Funktionen als Steuerungssoftware in den Schienenfahrzeugen implementiert.

In einem vierten Schritt S4 wird bei einem ausgewählten Schienenfahrzeug zumindest eine optionale Funktion unter Verwendung eines Schaltparameters, der der optionalen Funktion individuell zugeordnet ist, aktiviert bzw. deaktiviert.

Der benötigte Schaltparameter wird basierend auf Kundenwünschen außerhalb des Schienenfahrzeugs erstellt und nachfolgend zum ausgewählten Schienenfahrzeug übertragen.

Der aktivierten optionalen Funktion wird ein vorbestimmter Nutzungszeitraum zugeordnet.

Die Aktivierung bzw. Deaktivierung der optionalen Funktion erfolgt bei einem Schienenfahrzeug, das sich im operativen Betrieb befindet.

Die Festlegung des Schaltparameters erfolgt unter Verwendung Software-gestützter Werkzeuge, die nur eine zulässige Schaltparameter-Auswahl für entsprechende Funktionen erlaubt.

Die Schaltparameter werden einzeln oder in Form einer Datei abgespeichert, die für Steuergeräte des ausgewählten Schienenfahrzeugs unmittelbar verarbeitbar ist.

Die Schaltparameter sind verschlüsselt, so dass eine Entschlüsselung ausschließlich seitens des ausgewählten Schienenfahrzeugs durchführbar ist.

Die Schaltparameter werden über einen Kommunikationskanal an einen Service-Techniker übertragen, der die Steuerungssoftware im ausgewählten Schienenfahrzeug aktualisiert, oder werden direkt an das ausgewählte Schienenfahrzeug übertragen, wobei dessen Steuergeräte diese automatisiert in der Steuerungssoftware umsetzen.

Die Steuergeräte des Schienenfahrzeugs fragen bei der Inbetriebnahme an einer zentralen Stelle des Schienenfahrzeugs oder an einer landseitigen Kontrollstation nach, ob für das zugehörige Schienenfahrzeug neue Schaltparameter vorliegen.

Die Nachfrage wird mit Hilfe eines Umschalt-Managers koordiniert, um eine koordinierte Aktivierung bzw. Deaktivierung von optionalen Funktionen oder der Schaltparameter in zugehörigen optionalen Funktionen zu ermöglichen.

Die Aktivierung bzw. Deaktivierung der optionalen Funktion erfolgt in einem sicheren Zustand des Schienenfahrzeugs, bevorzugt im Stillstand oder in einer vorab definierten Fahrzeug-Umgebung.

Dem Triebfahrzeugführer des Schienenfahrzeugs wird ein Veto-Recht eingeräumt, um eine Steuerungssoftware-Konfiguration mit Bezug auf die optionale Funktion abzulehnen.

Eine dauerhafte Aktivierung einer optionalen Funktion wird in einen Urzustand der Steuerungssoftware übernommen, die zur Absicherung des Schienenfahrzeugs auf diesem abgespeichert ist.

Einem Schienenfahrzeug-Betreiber oder einem Schienenfahrzeug-Flottenmanager oder einem Schienenfahrzeug-Hersteller wird vor Ablauf des Nutzungszeitraums eine Warnmeldung angezeigt, um diesen auf den bevorstehenden Ablauf des Nutzungszeitraums hinzuweisen.

Die Warnmeldung einer optionalen Funktion bewirkt die Bildung gleichartiger Warnmeldungen für weitere optionale Funktionen.

## Patentansprüche

1. Verfahren zur Konfiguration einer Steuerungssoftware bei einem Schienenfahrzeug,
- bei dem in einer Steuerungssoftware, die für eine Vielzahl an Schienenfahrzeugen bestimmt ist, Grundfunktionen implementiert werden, die für den Grundbetrieb der Schienenfahrzeuge benötigt werden,
- bei dem in der Steuerungssoftware optionale Funktionen implementiert werden, die zur Durchführung einer Vielzahl von kundenspezifischen Anforderungsprofilen benötigt werden,
- bei dem die Grundfunktionen und die optionalen Funktionen in ihren Ausprägungen, Kombinationen und Funktionsabläufen vor Implementierung der Steuerungssoftware in den Schienenfahrzeugen getestet, validiert und zugelassen werden,
- bei dem die Grundfunktionen und die optionalen Funktionen als Steuerungssoftware nachfolgend in den Schienenfahrzeugen implementiert werden,
- bei dem bei einem ausgewählten Schienenfahrzeug zumindest eine optionale Funktion unter Verwendung eines Schaltparameters, der der optionalen Funktion individuell zugeordnet ist, aktiviert bzw. deaktiviert wird,
- bei dem der dazu benötigte Schaltparameter basierend auf einem speziellen kundenspezifischen Anforderungsprofil außerhalb des Schienenfahrzeugs erstellt und nachfolgend zum ausgewählten Schienenfahrzeug übertragen wird,
- wobei zugeordnete Schaltparameter seitens des Herstellers des Schienenfahrzeugs inhaltlich ausgewählt und festgelegt werden, um ein Flottenmanagement zu ermöglichen, bei dem ausgewählte Schienenfahrzeuge an spezifische Aufgaben nach Vorgabe des kundenspezifischen Anforderungsprofils angepasst werden,
- bei dem der aktivierten optionalen Funktion ein vorbestimmter Nutzungszeitraum zugeordnet wird,
- bei dem eine Liste aller optionalen Funktionen samt zugeordnetem Nutzungszeitraum des ausgewählten Schienenfahrzeugs unter Verwendung eines Webservers ferngesteuert abgerufen wird,
- bei dem dem Schienenfahrzeug-Hersteller vor Ablauf des Nutzungszeitraums eine Warnmeldung angezeigt wird, um diesen auf den bevorstehenden Ablauf des Nutzungszeitraums einer optionalen Funktion hinzuweisen,
- bei dem die Warnmeldung einer optionalen Funktion eine Bildung gleichartiger Warnmeldungen für weitere optionale Funktionen bewirkt, um zu verhindern, dass eine vorhersehbare Deaktivierung der optionalen Funktion unerwünschten Auswirkungen auf andere optionale Funktionen hat.

2. Verfahren nach Anspruch 1, bei dem die Aktivierung bzw. Deaktivierung der optionalen Funktion bei einem Schienenfahrzeug erfolgt, das sich im operativen Betrieb befindet.

3. Verfahren nach Anspruch 1 oder 2, bei dem die Festlegung des Schaltparameters unter Verwendung Software-gestützter Werkzeuge erfolgt, die nur eine zulässige Schaltparameter-Auswahl für entsprechende Funktionen erlaubt.

4. Verfahren nach einem der vorhergehenden Ansprüche, bei dem Schaltparameter einzeln oder in Form einer Datei abgespeichert werden, die für Steuergeräte des ausgewählten Schienenfahrzeugs unmittelbar verarbeitbar ist.

5. Verfahren nach Anspruch 4, bei dem Schaltparameter verschlüsselt werden, so dass eine Entschlüsselung ausschließlich seitens des ausgewählten Schienenfahrzeugs durchführbar ist.

6. Verfahren nach einem der vorhergehenden Ansprüche, bei dem Schaltparameter über einen Kommunikationskanal
- und über eine Schnittstelle an einen Service-Techniker übertragen werden, der die Steuerungssoftware im ausgewählten Schienenfahrzeug aktualisiert, oder
- direkt an das ausgewählte Schienenfahrzeug übertragen werden, wobei dessen Steuergeräte diese automatisiert in der Steuerungssoftware umsetzen.

7. Verfahren nach einem der vorhergehenden Ansprüche, bei dem Steuergeräte des Schienenfahrzeugs bei der Inbetriebnahme an einer zentralen Stelle des Schienenfahrzeugs oder an einer landseitigen Kontrollstation nachfragen, ob für das zugehörige Schienenfahrzeug neue Schaltparameter vorliegen.

8. Verfahren nach Anspruch 7, bei dem die Nachfrage mit Hilfe eines Umschalt-Managers koordiniert wird, um eine koordinierte Aktivierung bzw. Deaktivierung von optionalen Funktionen oder der Schaltparameter in zugehörigen optionalen Funktionen zu ermöglichen.

9. Verfahren nach einem der vorhergehenden Ansprüche, bei dem die Aktivierung bzw. Deaktivierung der optionalen Funktion in einem sicheren Zustand des Schienenfahrzeugs erfolgt, bevorzugt im Stillstand oder in einer vorab definierten Fahrzeug-Umgebung.

10. Verfahren nach einem der vorhergehenden Ansprüche, bei dem einem Triebfahrzeugführer des Schienenfahrzeugs ein Veto-Recht eingeräumt wird, um eine Steuerungssoftware-Konfiguration mit Bezug auf die optionale Funktion abzulehnen.

11. Verfahren nach einem der vorhergehenden Ansprüche, bei dem eine dauerhafte Aktivierung einer optionalen Funktion in einen Urzustand der Steuerungssoftware übernommen wird, die zur Absicherung des Schienenfahrzeugs auf diesem abgespeichert wird.

12. Verfahren nach Anspruch 1, bei dem die Warnmeldung einer optionalen Funktion die Bildung gleichartiger Warnmeldungen für weitere optionale Funktionen bewirkt.

13. Schienenfahrzeug mit einer Steuerungssoftware,
- bei dem die Steuerungssoftware, die für eine Vielzahl an Schienenfahrzeugen bestimmt ist, Grundfunktionen aufweist, die für den Grundbetrieb des Schienenfahrzeugs bestimmt sind,
- bei dem die Steuerungssoftware optionale Funktionen aufweist, die zur Durchführung einer Vielzahl von kundenspezifischen Anforderungsprofilen bestimmt sind,
- wobei die Grundfunktionen und die optionalen Funktionen in ihren Ausprägungen, Kombinationen und Funktionsabläufen vor einer Implementierung der Steuerungssoftware im Schienenfahrzeug getestet, validiert und zugelassen sind,
- bei dem zumindest eine optionale Funktion unter Verwendung eines Schaltparameters, der der optionalen Funktion individuell zugeordnet ist, aktivierbar bzw. deaktivierbar ist,
- bei dem der dazu benötigte Schaltparameter basierend auf einem speziellen kundenspezifischen Anforderungsprofil außerhalb des Schienenfahrzeugs erstellbar und nachfolgend zum ausgewählten Schienenfahrzeug zur Konfiguration der Steuerungssoftware übertragbar ist,
- wobei zugeordnete Schaltparameter seitens des Herstellers des Schienenfahrzeugs inhaltlich ausgewählt und festgelegt sind, um ein Flottenmanagement zu ermöglichen, bei dem ausgewählte Schienenfahrzeuge an spezifische Aufgaben nach Vorgabe des kundenspezifischen Anforderungsprofils anpassbar sind,
- bei dem der aktivierten optionalen Funktion ein vorbestimmter Nutzungszeitraum zugeordnet ist,
- bei dem eine Liste aller optionalen Funktionen samt zugeordnetem Nutzungszeitraum des ausgewählten Schienenfahrzeugs unter Verwendung eines Webservers ferngesteuert abrufbar ist,
- bei dem dem Schienenfahrzeug-Hersteller vor Ablauf des Nutzungszeitraums eine Warnmeldung anzeigbar ist, um diesen auf den bevorstehenden Ablauf des Nutzungszeitraums einer optionalen Funktion hinzuweisen,
- wobei die Warnmeldung einer optionalen Funktion eine Bildung gleichartiger Warnmeldungen für weitere optionale Funktionen bewirkt, um zu verhindern, dass eine vorhersehbare Deaktivierung der optionalen Funktion unerwünschten Auswirkungen auf andere optionale Funktionen hat.

14. Schienenfahrzeug nach Anspruch 13, bei dem die Aktivierung bzw. Deaktivierung der optionalen Funktion bei einem Schienenfahrzeug vornehmbar ist, das sich im operativen Betrieb befindet.

15. Schienenfahrzeug nach Anspruch 13 oder 14, bei dem die Festlegung des Schaltparameters unter Verwendung Software-gestützter Werkzeuge durchführbar ist, die nur eine zulässige Schaltparameter-Auswahl für entsprechende Funktionen erlauben.

16. Schienenfahrzeug nach einem der Ansprüche 13 bis 15, bei dem Schaltparameter einzeln oder in Form einer Datei abgespeichert sind, die für Steuergeräte des ausgewählten Schienenfahrzeugs unmittelbar verarbeitbar ist.

17. Schienenfahrzeug nach Anspruch 16, bei dem Schaltparameter verschlüsselt sind, so dass eine Entschlüsselung ausschließlich seitens des ausgewählten Schienenfahrzeugs durchführbar ist.

18. Schienenfahrzeug nach einem der Ansprüche 13 bis 17, bei dem Schaltparameter über einen Kommunikationskanal
- und über eine Schnittstelle an einen Service-Techniker übertragbar sind, der die Steuerungssoftware im ausgewählten Schienenfahrzeug aktualisiert, oder
- direkt an das ausgewählte Schienenfahrzeug übertragbar sind, wobei dessen Steuergeräte diese automatisiert in der Steuerungssoftware umsetzen.

19. Schienenfahrzeug nach einem der Ansprüche 13 bis 18, bei dem Steuergeräte des Schienenfahrzeugs bei der Inbetriebnahme derart geschaltet sind, dass diese an einer zentralen Stelle des Schienenfahrzeugs oder an einer landseitigen Kontrollstation nachfragen, ob für das zugehörige Schienenfahrzeug neue Schaltparameter vorliegen.

20. Schienenfahrzeug nach einem der Ansprüche 13 bis 19, bei dem eine dauerhafte Aktivierung einer optionalen Funktion in einen Urzustand der Steuerungssoftware übernehmbar und zur Absicherung des Schienenfahrzeugs auf diesem abgespeichert ist.

## Claims

1. Method for configuring control software in a rail vehicle,
- in which basic functions which are needed for the basic operation of the rail vehicles are implemented in control software intended for a multiplicity of rail vehicles,
- in which optional functions which are needed to implement a multiplicity of customer-specific requirements profiles are implemented in the control software,
- in which the embodiments, combinations and functional sequences of the basic functions and the optional functions are tested, validated and approved before the control software is implemented in the rail vehicles,
- in which the basic functions and the optional functions are subsequently implemented as control software in the rail vehicles,
- in which, in a selected rail vehicle, at least one optional function is activated and/or deactivated using a switching parameter individually assigned to the optional function,
- in which the switching parameter required for this purpose is created outside the rail vehicle on the basis of a special customer-specific requirements profile and is subsequently transmitted to the selected rail vehicle,
- the content of assigned switching parameters being selected and determined by the manufacturer of the rail vehicle in order to enable fleet management in which selected rail vehicles are adapted to specific tasks according to the specification of the customer-specific requirements profile,
- in which the activated optional function is assigned a predetermined period of use,
- in which a list of all optional functions along with the associated period of use of the selected rail vehicle is retrieved by remote control using a web server,
- in which a warning is displayed to the rail vehicle manufacturer before the period of use has expired to notify them of the imminent expiry of the period of use of an optional function,
- in which the warning pertaining to an optional function causes similar warnings to be generated for other optional functions to prevent foreseeable deactivation of the optional function from having undesirable effects on other optional functions.

2. Method according to Claim 1, in which the optional function is activated and/or deactivated in a rail vehicle which is in operation.

3. Method according to Claim 1 or 2, in which the switching parameter is determined using software-supported tools which allow only a permissible switching parameter selection for corresponding functions.

4. Method according to one of the preceding claims, in which switching parameters are stored individually or in the form of a file which can be directly processed by control devices of the selected rail vehicle.

5. Method according to Claim 4, in which switching parameters are encrypted, with the result that decryption can be carried out solely by the selected rail vehicle.

6. Method according to one of the preceding claims, in which switching parameters are transmitted via a communication channel
- and via an interface to a service engineer who updates the control software in the selected rail vehicle, or
- are transmitted directly to the selected rail vehicle, the control devices thereof automatically implementing said switching parameters in the control software.

7. Method according to one of the preceding claims, in which control devices of the rail vehicle, during start-up, inquire, at a central entity of the rail vehicle or at a landside control station, whether there are new switching parameters for the associated rail vehicle.

8. Method according to Claim 7, in which the inquiry is coordinated with the aid of a changeover manager in order to enable coordinated activation and/or deactivation of optional functions or of the switching parameters in associated optional functions.

9. Method according to one of the preceding claims, in which the optional function is activated and/or deactivated in a safe state of the rail vehicle, preferably at a standstill or in a predefined vehicle environment.

10. Method according to one of the preceding claims, in which a veto right is granted to a traction vehicle driver of the rail vehicle in order to reject a control software configuration with respect to the optional function.

11. Method according to one of the preceding claims, in which permanent activation of an optional function is transferred to an original state of the control software, said permanent activation being stored on the rail vehicle to ensure the safety thereof.

12. Method according to Claim 1, in which the warning pertaining to an optional function causes similar warnings to be generated for other optional functions.

13. Rail vehicle having control software,
- in which the control software intended for a multiplicity of rail vehicles has basic functions which are intended for the basic operation of the rail vehicle,
- in which the control software has optional functions which are intended to implement a multiplicity of customer-specific requirements profiles,
- the embodiments, combinations and functional sequences of the basic functions and the optional functions having been tested, validated and approved before the control software is implemented in the rail vehicle,
- in which at least one optional function can be activated and/or deactivated using a switching parameter individually assigned to the optional function,
- in which the switching parameter required for this purpose can be created outside the rail vehicle on the basis of a special customer-specific requirements profile and can subsequently be transmitted to the selected rail vehicle for the purpose of configuring the control software,
- the content of assigned switching parameters having been selected and determined by the manufacturer of the rail vehicle in order to enable fleet management in which selected rail vehicles can be adapted to specific tasks according to the specification of the customer-specific requirements profile,
- in which the activated optional function has an assigned predetermined period of use,
- in which a list of all optional functions along with the associated period of use of the selected rail vehicle can be retrieved by remote control using a web server,
- in which a warning can be displayed to the rail vehicle manufacturer before the period of use has expired to notify them of the imminent expiry of the period of use of an optional function,
- in which the warning pertaining to an optional function causes similar warnings to be generated for other optional functions to prevent foreseeable deactivation of the optional function from having undesirable effects on other optional functions.

14. Rail vehicle according to Claim 13, in which the optional function can be activated and/or deactivated in a rail vehicle which is in operation.

15. Rail vehicle according to Claim 13 or 14, in which the switching parameter can be determined using software-supported tools which allow only a permissible switching parameter selection for corresponding functions.

16. Rail vehicle according to one of Claims 13 to 15, in which switching parameters are stored individually or in the form of a file which can be directly processed by control devices of the selected rail vehicle.

17. Rail vehicle according to Claim 16, in which switching parameters are encrypted, with the result that decryption can be carried out solely by the selected rail vehicle.

18. Rail vehicle according to one of Claims 13 to 17, in which switching parameters can be transmitted via a communication channel
- and via an interface to a service engineer who updates the control software in the selected rail vehicle, or
- can be transmitted directly to the selected rail vehicle, the control devices thereof automatically implementing said switching parameters in the control software.

19. Rail vehicle according to one of Claims 13 to 18, in which control devices of the rail vehicle are switched during start-up in such a manner that they inquire, at a central entity of the rail vehicle or at a landside control station, whether there are new switching parameters for the associated rail vehicle.

20. Rail vehicle according to one of Claims 13 to 19, in which permanent activation of an optional function can be transferred to an original state of the control software and is stored on the rail vehicle to ensure the safety thereof.

## Revendications

1. Procédé de configuration d'un logiciel de commande dans un véhicule ferroviaire,
- dans lequel des fonctions de base nécessaires pour l'exploitation de base des véhicules ferroviaires sont implémentées dans un logiciel de commande destiné à un grand nombre de véhicules ferroviaires,
- dans lequel des fonctions optionnelles nécessaires pour la mise en oeuvre d'un grand nombre de profils de demande spécifiques au client sont implémentées dans le logiciel de commande,
- dans lequel les fonctions de base et les fonctions optionnelles sont testées, validées et autorisées quant à leurs caractéristiques, combinaisons et déroulements fonctionnels avant la mise en oeuvre du logiciel de commande dans les véhicules ferroviaires,
- dans lequel les fonctions de base et les fonctions optionnelles sont ensuite implémentées sous forme de logiciel de commande dans les véhicules ferroviaires,
- dans lequel au moins une fonction optionnelle est activée ou désactivée pour un véhicule ferroviaire sélectionné en utilisant un paramètre de commutation associé individuellement à la fonction optionnelle,
- dans lequel le paramètre de commutation nécessaire pour cela est créé à l'extérieur du véhicule ferroviaire en se basant sur un profil de demande spécifique au client et est ensuite transféré au véhicule ferroviaire sélectionné,
- dans lequel des paramètres de commutation associés sont sélectionnés et définis quant à leur contenu par le fabricant du véhicule ferroviaire afin de permettre une gestion de flotte au sein de laquelle des véhicules ferroviaires sélectionnés sont adaptés à des tâches spécifiques après indication du profil de demande spécifique au client,
- dans lequel une période d'utilisation prédéterminée est associée à la fonction optionnelle activée,
- dans lequel une liste de toutes les fonctions optionnelles, y compris la période d'utilisation associée du véhicule ferroviaire sélectionné, est consultée à distance en utilisant un serveur Web,
- dans lequel un message d'avertissement est indiqué au fabricant de véhicule ferroviaire avant la fin de la période d'utilisation afin de l'informer de la fin imminente de la période d'utilisation d'une fonction optionnelle,
- dans lequel le message d'avertissement d'une fonction optionnelle entraîne la formation de messages d'avertissement similaires pour d'autres fonctions optionnelles afin d'éviter qu'une désactivation prévisible de la fonction optionnelle n'ait des effets indésirables sur d'autres fonctions optionnelles.

2. Procédé selon la revendication 1, dans lequel l'activation ou la désactivation de la fonction optionnelle peut être effectuée sur un véhicule ferroviaire qui est en service opérationnel.

3. Procédé selon la revendication 1 ou 2, dans lequel la détermination du paramètre de commutation est effectuée en utilisant des outils s'appuyant sur des logiciels et permettant seulement une sélection autorisée de paramètres de commutation pour des fonctions correspondantes.

4. Procédé selon l'une quelconque des revendications précédentes, dans lequel les paramètres de commutation sont stockés individuellement ou sous la forme d'un fichier qui peut être traité directement pour des unités de commande du véhicule ferroviaire sélectionné.

5. Procédé selon la revendication 4, dans lequel les paramètres de commutation sont cryptés de sorte qu'un décryptage ne peut être mis en oeuvre que par le véhicule ferroviaire sélectionné.

6. Procédé selon l'une quelconque des revendications précédentes, dans lequel les paramètres de commutation sont transmis par l'intermédiaire d'un canal de communication,
- et par l'intermédiaire d'une interface à un technicien de service qui met à jour le logiciel de commande dans le véhicule ferroviaire sélectionné, ou
- directement au véhicule ferroviaire sélectionné, les unités de commande dudit véhicule les intégrant de manière automatisée dans le logiciel de commande.

7. Procédé selon l'une quelconque des revendications précédentes, dans lequel, lors de la mise en service, les unités de commande du véhicule ferroviaire demandent à un emplacement central du véhicule ferroviaire ou à une station de contrôle au sol s'il existe de nouveaux paramètres de commutation pour le véhicule ferroviaire associé.

8. Procédé selon la revendication 7, dans lequel la demande est coordonnée à l'aide d'un gestionnaire de commutation afin de permettre une activation ou une désactivation coordonnée des fonctions optionnelles ou des paramètres de commutation dans les fonctions optionnelles associées.

9. Procédé selon l'une quelconque des revendications précédentes, dans lequel l'activation ou la désactivation de la fonction optionnelle a lieu dans un état de sécurité du véhicule ferroviaire, de manière préférée à l'arrêt ou dans un environnement de véhicule prédéfini.

10. Procédé selon l'une quelconque des revendications précédentes, dans lequel un droit de veto est accordé à un conducteur d'engin de traction afin de refuser une configuration de logiciel de commande par rapport à la fonction optionnelle.

11. Procédé selon l'une quelconque des revendications précédentes, dans lequel une activation permanente d'une fonction optionnelle, mémorisée dans le logiciel de commande afin de protéger le véhicule ferroviaire, est adoptée dans un état initial du logiciel de commande.

12. Procédé selon la revendication 1, dans lequel le message d'avertissement d'une fonction optionnelle entraine la formation de messages d'avertissement similaires pour d'autres fonctions optionnelles.

13. Véhicule ferroviaire avec un logiciel de commande,
- dans lequel le logiciel de commande destiné à un grand nombre de véhicules ferroviaires présente des fonctions de base destinées au fonctionnement de base du véhicule ferroviaire,
- dans lequel le logiciel de commande présente des fonctions optionnelles destinées à la mise en oeuvre d'un grand nombre de profils de demande spécifiques au client,
- dans lequel les fonctions de base et les fonctions optionnelles sont testées, validées et autorisées quant à leurs caractéristiques, combinaisons et déroulements fonctionnels avant la mise en oeuvre du logiciel de commande dans le véhicules ferroviaire,
- dans lequel au moins une fonction optionnelle peut être activée ou désactivée en utilisant un paramètre de commutation qui est associé individuellement à la fonction optionnelle,
- dans lequel le paramètre de commutation nécessaire pour cela peut être créé à l'extérieur du véhicule ferroviaire en se basant sur un profil de demande spécial spécifique au client et peut ensuite être transféré au véhicule ferroviaire sélectionné afin de configurer le logiciel de commande,
- dans lequel les paramètres de commutation associés sont sélectionnés et définis par le fabricant du véhicule ferroviaire quant à leur contenu afin de permettre une gestion de flotte au sein de laquelle les véhicules ferroviaires sélectionnés peuvent être adaptés à des tâches spécifiques après indication du profil de demande spécifique au client,
- dans lequel une période d'utilisation prédéterminée est associée à la fonction optionnelle activée,
- dans lequel une liste de toutes les fonctions optionnelles, y compris la période d'utilisation associée du véhicule ferroviaire sélectionné, peut être consultée à distance en utilisant un serveur Web,
- dans lequel un message d'avertissement peut être indiqué au fabricant du véhicule ferroviaire avant la fin de la période d'utilisation afin de l'informer de la fin imminente de la période d'utilisation d'une fonction optionnelle,
- dans lequel le message d'avertissement d'une fonction optionnelle entraîne la formation de messages d'avertissement similaires pour d'autres fonctions optionnelles afin d'éviter qu'une désactivation prévisible de la fonction optionnelle n'ait des effets indésirables sur d'autres fonctions optionnelles.

14. Véhicule ferroviaire selon la revendication 13, dans lequel l'activation ou la désactivation de la fonction optionnelle peut être effectuée sur un véhicule ferroviaire qui est en service opérationnel.

15. Véhicule ferroviaire selon la revendication 13 ou 14, dans lequel la détermination du paramètre de commutation peut être mise en oeuvre en utilisant des outils s'appuyant sur des logiciels et permettant seulement une sélection autorisée de paramètres de commutation pour des fonctions correspondantes.

16. Véhicule ferroviaire selon l'une quelconque des revendications 13 à 15, dans lequel les paramètres de commutation sont stockés individuellement ou sous la forme d'un fichier qui peut être traité directement pour des unités de commande du véhicule ferroviaire sélectionné.

17. Véhicule ferroviaire selon la revendication 16, dans lequel les paramètres de commutation sont cryptés, de sorte qu'un décryptage ne peut être mis en oeuvre que par le véhicule ferroviaire sélectionné.

18. Véhicule ferroviaire selon l'une quelconque des revendications 13 à 17, dans lequel les paramètres de commutation sont transmis par l'intermédiaire d'un canal de communication,
- et par l'intermédiaire d'une interface à un technicien de service qui met à jour le logiciel de commande dans le véhicule ferroviaire sélectionné, ou
- directement au véhicule ferroviaire sélectionné, les unités de commande dudit véhicule les intégrant de manière automatisée dans le logiciel de commande.

19. Véhicule ferroviaire selon l'une quelconque des revendications 13 à 18, dans lequel les unités de commande du véhicule ferroviaire sont commutées lors de la mise en service de telle manière qu'elles demandent à un emplacement central du véhicule ferroviaire ou à une station de contrôle au sol s'il existe de nouveaux paramètres de commutation pour le véhicule ferroviaire correspondant.

20. Véhicule ferroviaire selon l'une quelconque des revendications 13 à 19, dans lequel une activation permanente d'une fonction optionnelle est adoptée dans un état initial du logiciel de commande et est enregistrée dans ledit logiciel de commande afin de protéger le véhicule ferroviaire.
